# EUROPEAN PATENT SPECIFICATION

(11) **EP 1 738 653 B1**
(45) Date of publication and mention of the grant of the patent: **04.03.2009**
(21) Application number: 06115544.6
(22) Date of filing: 15.06.2006
(51) Int. Cl.: A23G 9/28, B67D 1/00

(54) **Machine for dispensing liquid or semi-liquid food products**
Maschine zur Ausgabe von flüssigen oder halbflüssigen Lebensmittelprodukten
Machine pour distribuer des denrées alimentaires liquides ou semi-liquides

(30) Priority: 27.06.2005 IT BO20050423
(43) Date of publication of application: 03.01.2007
(73) Proprietor: Ali SpA, 20123 Milano (IT)
(72) Inventor: Vannini, Antonio, 40038 Vergato (Bologna) (IT); Escriva Estruch, Vicente, 46007 Gandia (Valencia) (ES)
(74) Representative: Ghioni, Carlo Raoul Maria

(56) References cited:
- EP-A- 0 154 308
- EP-A- 1 186 239
- EP-A- 1 279 339
- DE-A1- 4 429 077
- GB-A- 1 323 395

## Description

The present invention relates to a machine for dispensing liquid or semi-liquid food products.

In particular, the present invention applies in the sector of machines for the preparation, preservation and dispensing of liquid or semi-liquid food products at a low temperature, just above zero, such as sorbets, crushed-ice drinks or refrigerated drinks.

As is known, such machines comprise a transparent tank, through which the consumer can see the product which is usually coloured, equipped with a tap for dispensing the product. The tank houses suitable refrigerating and mixing means, designed to guarantee a uniform product with an even temperature throughout the tank.

The tap consists of a cylindrical body made on a side wall of the tank, inside which a plunger moved by a suitable lever is slidably inserted and guided. The plunger is mobile between a closed position, in which it blocks an opening made in the tank and leading to a side portion of the cylindrical body, and an open position, in which, raised, it frees the opening through which the products flows, allowing the product to flow out through a lower end of the cylindrical body pipe.

The plunger has two ring-shaped seals distanced from one another along its longitudinal axis. In the closed position, the lower ring-shaped seal lies below the opening made in the tank, whilst the upper ring-shaped seal lies above said opening, in such a way as to prevent the product from flowing out through the plunger guide pipe. In the open position, the lower ring-shaped seal is moved so that it is above the opening.

Therefore, when the plunger is in the closed position, part of the product leaks between the edges of the opening and the portion of the plunger between the two ring-shaped seals, until the gap delimited by an inner wall of the pipe, opposite the opening relative to the plunger, and the plunger itself is partly filled.

Even during plunger movement, the product remains in said gap, trapped by the ring-shaped seals, and, since it is not mixed again and cooled like the rest of the product contained in the tank, its food properties are compromised. Moreover, since the tank and the cylindrical body are made of transparent material, product stagnation compromises the appearance of the machine and the effect on possible purchasers. The tank must therefore be frequently emptied so that the plunger can be disassembled and cleaned.

In the machine known from EP-1279339 this situation is improved by providing a bigger gap, and thus facilitating purging of material therein. From GB-1323395 a plunger is known, which provides for a better seal between two linked flow passages.

In this situation, the technical purpose which forms the basis of the present invention is to provide a machine for dispensing liquid or semi-liquid food products which substantially overcomes the above-mentioned disadvantages.

Within the scope of this technical purpose, an important aim of the invention is to propose a machine for dispensing liquid or semi-liquid food products which allows the prevention of product stagnation in zones where it cannot be kept in the conditions suitable for its preservation.

Another aim is to provide a machine for dispensing liquid or semi-liquid food products which allows the frequency of maintenance to be reduced and facilitates maintenance operations.

The technical purpose indicated and the aims specified are substantially achieved by a machine for dispensing liquid or semi-liquid food products comprising one or more of the technical solutions described in the claims herein.

A preferred, non-limiting embodiment of a machine for dispensing liquid or semi-liquid food products is now described by way of example with reference to the accompanying drawings, in which:
- Figure 1 is a perspective view of a front portion of a machine for dispensing liquid or semi-liquid food products in accordance with the present invention;
- Figure 2 is a longitudinal section of a portion of the machine illustrated in Figure 1;
- Figure 3 is a cross-section according to line III
- III from Figure 2;
- Figure 4 illustrates the cross-section of the portion from Figure 2 in accordance with an alternative embodiment of the machine according to the invention;
- Figure 5 is an exploded view of a detail of the machine illustrated in Figure 1.

With reference to the accompanying drawings, the numeral 1 denotes as a whole a machine for dispensing liquid or semi-liquid food products. The machine 1 comprises a tank 2 for containing a product 3 to be dispensed. As illustrated in the accompanying drawings, the machine 1 is preferably of the type designed to prepare, preserve and distribute liquid or semi-liquid products at a low temperature, close to zero, such as ice-cold drinks, crushed-ice drinks or sorbets. In such a situation, the tank 2 houses suitable refrigerating means, for example an evaporator of a cooling circuit, and suitable mixing means, such as a blade which rotates about its own shaft, designed to keep all of the product contained at the correct temperature. Such means are of the known type and therefore are not illustrated in the accompanying drawings. The tank 2 is preferably made of transparent material, in such a way that it allows the product contained in it, usually coloured, to be seen by the potential purchaser.

The machine 1 also has a tap 4 for dispensing the product from the tank 2, the tap 4 consisting of a pipe 5 which has a circular cross-section which is in communication with the tank 2, by means of an opening 6 located on a side portion 7 of the pipe 5, and houses and guides the sliding of a plunger 8 mobile in the pipe 5 along a longitudinal axis Y shared by the plunger 8 and the pipe 5.

As illustrated in the accompanying drawings, the guide pipe 5 is delimited by a cylindrical wall 9 made of the same transparent material as the tank 2 and located on a side wall 10 of the tank 2.

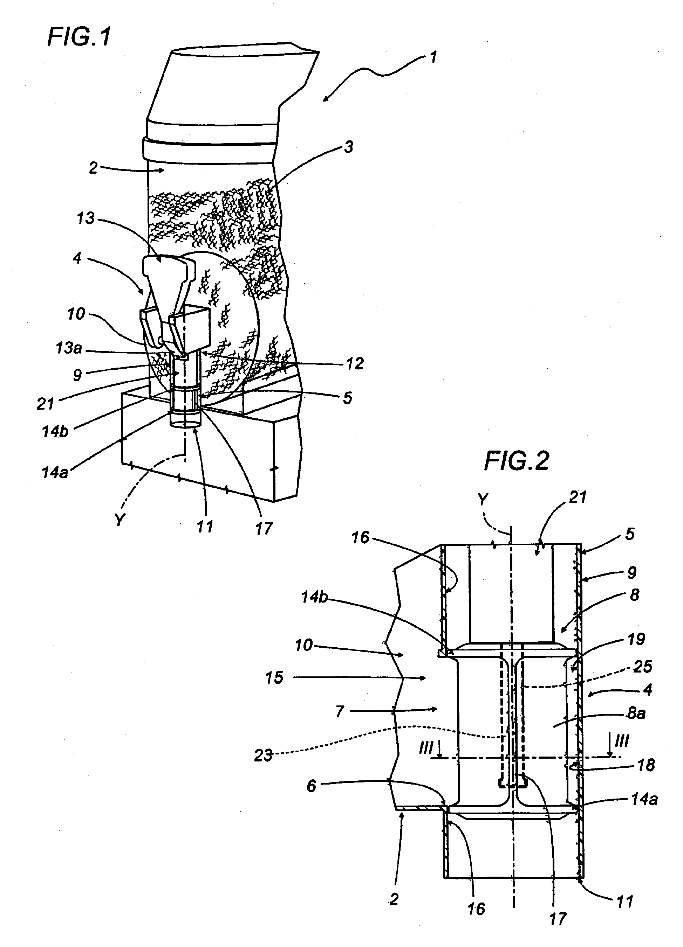

When the machine 1 is in use, resting on a table, the pipe 5 extends vertically between a lower end 11, below which a container is placed to receive the product 3 dispensed, and an upper end 12, where a lever 13 is fitted for moving the plunger 8, of the known type and therefore not described in detail (Figure 1).

As shown more clearly in Figure 2, the opening 6 is therefore made in the side wall 10 of the tank 2 and in the cylindrical wall 9, which meet at that point, and it is opened or closed by the plunger 8, which is mobile in the pipe 5 between a closed position, in which it blocks the opening 6, and an open position (not illustrated), in which, raised by the lever 13, it frees the opening 6 so that the product 3 can flow under the effect of gravity through the opening 6 and the lower end 11 of the pipe 5.

The plunger 8, which in the example illustrated consists of a cylindrical body with a circular cross-section, has two ring-shaped seals 14a, 14b located on an outer surface 8a of the plunger 8 and distanced from one another along the longitudinal axis Y, so as to create a hydraulic seal towards the outside of the tank 2.

The two seals 14a, 14b, the first 14a fitted at a lower end of the plunger 8 and the second approximately one third of the way along the length of the plunger, delimit a first portion 15 of the plunger 8. In the closed position, the first portion 15 lies opposite the opening 6, so as to close it. In said position the two ring-shaped seals 14a, 14b lie in contact with an inner surface 16 of the pipe 5 and prevent product 3 leakage towards the lower end 11 and the upper end 12 of the pipe 5. In the open position, the plunger 8 is raised until its lower end and the first ring-shaped seal 14a are above the opening 6.

The plunger 8 is also fitted with auxiliary seals 17, each extending on the side surface 8a of the plunger 8 between the ring-shaped seals 14a, 14b and lying in sliding contact with the inner surface 16 of the pipe 8. In the embodiments illustrated, each of the auxiliary seals 17 is straight and parallel with the longitudinal axis Y, in such a way that they move with the plunger 8 remaining parallel and in continuous contact with the inner surface 16 of the pipe 8.

The auxiliary seals 17, together with the ring-shaped seals 14a, 14b and the side surface 8a of the plunger 8 and a portion 18 of the inner surface 16 of the guide pipe 5, located on the opposite side to the opening 6, delimit a sealed chamber 19 (Figures 2, 3 and 4), which the product 3 cannot penetrate and stagnate in, whatever the position of the plunger 8 in the pipe 5. The sealed chamber 19 extends partly around the plunger 8 and has, in a cross-section of the longitudinal axis Y, the shape of an arc of a circle whose opposite ends are formed by the auxiliary seals 17. The depth of the chamber 19, measured along a radial direction with its centre on the longitudinal axis Y, is substantially equal to the thickness of the auxiliary seals 17.

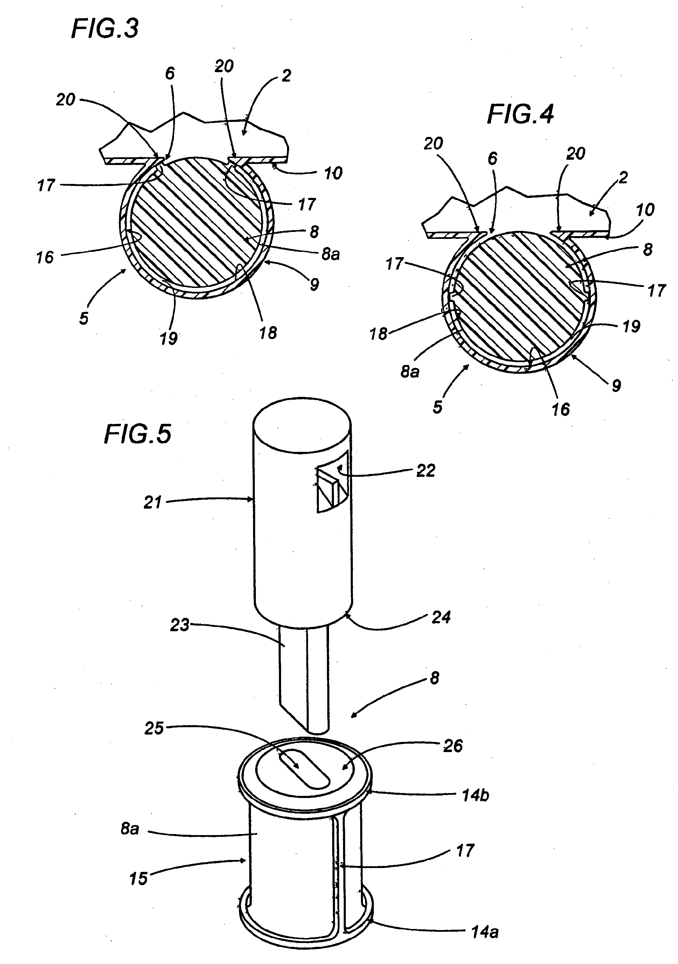

In accordance with the embodiment illustrated in Figure 3, the chamber 19 forms an arc which subtends an angle greater than one hundred and eighty degrees and the auxiliary seals 17 are in sliding contact with the opposite longitudinal edges 20 of the opening 6, said edges 20, in such a case, being straight.

According to the alternative embodiment in Figure 4, the auxiliary seals 17 are located on diametrically opposed sides of the plunger 8, not far from the opposite longitudinal edges 20 of the opening 6, and the chamber 19 forms a semi-circle.

To facilitate maintenance operations, the ring-shaped seals 14a, 14b and the auxiliary seals 17 are made as a single part with the first portion 15 of the plunger 8.

Moreover, as illustrated in Figure 5, the plunger 8 has a second portion 21 which is joined to the first portion 15 and has an engagement seat 22 designed to receive, in the known way, one end 13a of the movement lever 13.

The second portion 21 has a projection 23 extending from a lower face 24 of the second portion 21 and inserted and fixed, for example by gluing, in a cavity 25 made in an upper face 26 of the first portion 15, close to the second seal 14b.

The first and second portions 15, 21 are made of different materials, each suitable for the task to be performed by the respective portion 15, 21 of the plunger 8.

In particular, the second portion 21 is made of rigid material, such as plastic, that is to say, a material which does not deform if stressed by the forces in play during normal use of the machine 1. The second portion 21 must withstand the traction or pushing force exerted by the lever 13 on the seat 22 and transmit it to the first portion 15.

The first portion 15 is made of a more yielding material than the second portion 21, for example rubber, which deforms when inserted in the pipe 5 to guarantee the hydraulic seal at the seals 14a, 14b, 17.

However, the scope of the present invention also covers the use of seals 14a, 14b, 17 installed in grooved seats made in the side surface 8a of the plunger 8 which, in such a case, consists of a single rigid plastic part.

During use, the auxiliary seals 17, together with the ring-shaped seals 14a, 14b, prevent product 3 leakage into the gap formed by the chamber 19, that is to say in zones of the tap 4 where the product 3, stagnating, cannot be kept in the conditions suitable for its preservation and where it compromises the appearance of the machine and the effect on possible purchasers.

Therefore, the invention allows maintenance on the machine to be limited and simplified.

The invention described may be modified and adapted without thereby departing from the scope of the inventive concept defined in the claims herein.

## Claims

1. A machine for dispensing liquid or semi-liquid food products, comprising a tank (2) for containing a product (3) to be dispensed, a tap (4) for dispensing the product (3) from the tank (2) having a guide pipe (5) in communication with the tank (2) by means of an opening (6) located on a side portion (7) of the pipe (5), and slidably housing a plunger (8) axially mobile in the pipe (5), for opening or closing the opening (6); the plunger (8) being fitted with ring-shaped seals (14a, 14b) distanced from one another along a longitudinal axis (Y) of the plunger (8), providing a hydraulic seal towards the outside of the tank (2); the plunger (8) being also fitted with auxiliary seals (17), each expending between the ring-shaped seals (14a, 14b); the machine being **characterised in that** said auxiliary seals (17), together with the ring-shaped seals (14a, 14b), a side surface (8a) of the plunger (8) and an inner surface (16) of the guide pipe (5) located on the opposite side to the opening (6); delimit a sealed chamber (19) which the product (3) cannot penetrate and stagnate in, whatever the position of the plunger (8) in the pipe (5), so as to prevent the product (3) from penetrating and stagnating in zones where it cannot be kept in conditions suitable for its preservation.

2. The machine according to claim 1, **characterised in that** it comprises two auxiliary seals (17) located on diametrically opposed sides of the plunger (8) and in sliding contact witch the inner surface (16) of the guide pipe (5).

3. The machine according to claim 1, **characterised in that** it comprises two auxiliary seals (17) in sliding contact with opposite longitudinal edges (20) of the opening (6).

4. The machine according to claim 1, **characterised in that** each of the auxiliary seals (17) extends parallel with the longitudinal axis (Y) of the plunger (8).

5. The machine according to claim 1, **characterised in that** the plunger (8) has a first portion (15) made as a single part with the auxiliary seals (17) and the ring-shaped seals (14a, 14b).

6. The machine according to claim 5, **characterised in that** the first portion (15) is made of rubber.

7. The machine according to claim 5, **characterised in that** the plunger (8) has a second portion (21) joined to the first portion (15) and connected to a lever (13) for moving the plunger (8).

8. The machine according to claim 7, **characterised in that** the second portion (21) is made of a material different to that of the first portion (15).

9. The machine according to claim 8, **characterised in that** the first portion (15) is made of a more yielding material than the second portion (21).

## Patentansprüche

1. Eine Maschine zur Ausgabe von flüssigen oder halbflüssigen Lebensmittelprodukten, die Folgendes umfasst: einen Behälter (2), um ein Produkt (3) zu enthalten, das ausgegeben werden soll, einen Hahn (4) zur Ausgabe des Produkts (3) aus dem Behälter (2), der ein Leitungsrohr (5) hat, das durch eine Öffnung (6), die sich an einem seitlichen Anteil (7) des Rohres (5) befindet, mit dem Behälter (2) in Verbindung steht, und in dem gleitend ein Tauchkolben (8) angebracht ist, der in Axialrichtung in dem Rohr (5) verschoben werden kann, um die Öffnung (6) zu öffnen bzw. zu schließen; der Tauchkolben (8) ist mit ringförmigen Dichtungen (14a, 14b) montiert, die auf einer Längsachse (Y) des Tauchkolbens (8) in einem gewissen Abstand voneinander liegen und eine hydraulische Dichtung zur Außenseite des Behälters (2) bieten; der Tauchkolben (8) ist außerdem mit zusätzlichen Dichtungen (17) montiert, die sich jeweils zwischen den ringförmigen Dichtungen (14a, 14b) erstrecken;
**die Maschine ist dadurch gekennzeichnet, dass** die besagten zusätzlichen Dichtungen (17) zusammen mit den ringförmigen Dichtungen (14a, 14b), einer Seitenfläche (8a) des Tauchkolbens (8) und einer Innenfläche (16) des Führungsrohrs (5), die sich auf der gegenüberliegenden Seite von der Öffnung (6) befindet, eine abgedichtete Kammer abgrenzen (19), in die das Produkt (3) nicht eindringen kann und in der es sich nicht stauen kann, gleich, welche Position der Tauchkolben (8) im Rohr (5) einnimmt, sodass verhindert wird, dass das Produkt (3) in Bereiche eindringt und sich dort staut, in denen es nicht unter Bedingungen bewahrt werden kann, die für seine Erhaltung bzw. Konservierung geeignet sind.

2. Die Maschine nach Patentanspruch 1, **gekennzeichnet dadurch, dass** sie zwei zusätzliche Dichtungen (17) umfasst, die auf diametral gegenüberliegenden Seiten des Tauchkolbens (8) liegen und sich in einem gleitenden Kontakt mit der Innenfläche (16) des Führungsrohrs (5) befinden.

3. Die Maschine nach Patentanspruch 1, **gekennzeichnet dadurch, dass** sie zwei zusätzliche Dichtungen (17) umfasst, die sich in einem gleitenden Kontakt mit gegenüberliegenden längsgerichteten Rändern (20) der Öffnung (6) befinden.

4. Die Maschine nach Patentanspruch 1, **gekennzeichnet dadurch, dass** jede sich jede der zusätzlichen Dichtungen (17) parallel zu der Längsachse (Y) des Tauchkolbens (8) erstreckt.

5. Die Maschine nach Patentanspruch 1, **gekennzeichnet dadurch, dass** der Tauchkolben (8) einen ersten Anteil (15) hat, der mit den zusätzliche Dichtungen (17) und den ringförmigen Dichtungen (14a, 14 b) ein einziges Teil bildet.

6. Die Maschine nach Patentanspruch 5, **gekennzeichnet dadurch, dass** der erste Anteil (15) aus Gummi besteht.

7. Die Maschine nach Patentanspruch 5, **gekennzeichnet dadurch, dass** der Tauchkolben (8) einen zweiten Anteil (21) hat, der mit dem ersten Anteil (15) zusammengefügt ist und mit einem Hebel (13) verbunden ist, um den Tauchkolben (8) zu bewegen.

8. Die Maschine nach Patentanspruch 7, **gekennzeichnet dadurch, dass** der zweite Anteil (21) aus einem Material besteht, das sich von demjenigen des ersten Anteils (15) unterscheidet.

9. Die Maschine nach Patentanspruch 8, **gekennzeichnet dadurch, dass** der erste Anteil (15) aus einem Material besteht, das leichter nachgibt als der zweite Anteil (21).

## Revendications

1. Une machine pour distribuer des denrées alimentaires liquides ou semi-liquides, comprenant un réservoir (2) pour contenir une denrée (3) à distribuer, un robinet (4) pour distribuer ladite denrée (3) du réservoir (2) doté d'un conduit de guidage (5) en communication avec ledit réservoir (2), par l'intermédiaire d'une ouverture (6) située sur une portion latérale (7) du conduit (5), et logeant de façon coulissante un piston (8) mobile axialement dans ledit conduit (5) pour l'ouverture ou la fermeture de l'ouverture (6) ; le piston (8) étant doté de joints d'étanchéité annulaires (14a, 14b) séparés l'un de l'autre le long d'un axe longitudinal (Y) du piston (8), fournissant une étanchéité hydraulique vers l'extérieur du réservoir (2) ; le piston (8) étant également doté de joints d'étanchéité auxiliaires (17) se développant, chacun, entre les joints d'étanchéité annulaires (14a, 14b) ; la machine étant **caractérisée en ce que** lesdits joints d'étanchéité auxiliaires (17) délimitent, avec les joints d'étanchéité annulaires (14a, 14b), une surface latérale (8a) du piston (8) et une surface intérieure (16) du conduit de guidage (5) située à l'opposé de l'ouverture (6), une chambre étanche (19) dans laquelle la denrée (3) ne peut pas pénétrer et stagner, quelle que soit la position du piston (8) dans le conduit (5), de manière à éviter que la denrée (3) ne pénètre et ne stagne dans des zones où elle ne peut pas être maintenue dans des conditions appropriées pour sa conservation.

2. La machine selon la revendication 1, **caractérisée en ce qu'**elle comprend deux joints d'étanchéité auxiliaires (17) situés sur des côtés diamétralement opposés du piston (8) et en contact coulissant avec la surface intérieure (16) du conduit de guidage (5).

3. La machine selon la revendication 1, **caractérisée en ce qu'**elle comprend deux joints d'étanchéité auxiliaires (17) en contact coulissant avec des bords longitudinaux (20) opposés de l'ouverture (6).

4. La machine selon la revendication 1, **caractérisée en ce que** chacun des joints d'étanchéité auxiliaires (17) se développe parallèlement à l'axe longitudinal (Y) du piston (8).

5. La machine selon la revendication 1, **caractérisée en ce que** le piston (8) comprend une première partie (15) réalisée en pièce unique avec les joints d'étanchéité auxiliaires (17) et les joints d'étanchéité annulaires (14a, 14b).

6. La machine selon la revendication 5, **caractérisée en ce que** la première partie (15) est réalisée en caoutchouc.

7. La machine selon la revendication 5, **caractérisée en ce que** le piston (8) comprend une deuxième partie (21) jointe à la première partie (15) et reliée à un levier (13) d'actionnement du piston (8).

8. La machine selon la revendication 7, **caractérisée en ce que** la deuxième partie (21) est réalisée dans un matériau autre que celui de la première partie (15).

9. La machine selon la revendication 8, **caractérisée en ce que** la première partie (15) est réalisée dans un matériau plus souple que celui de la deuxième partie (21).
